# EUROPEAN PATENT APPLICATION

(11) **EP 2 819 421 A1**
(43) Date of publication of application: **31.12.2014**
(21) Application number: 13196567.5
(22) Date of filing: 10.12.2013
(51) Int. Cl.: H04N 21/41, H04N 21/432, H04N 21/433, H04N 21/436

(54) **Video output device, television program-related program, and video output method**

(30) Priority: 28.06.2013 JP 2013137263
(71) Applicant: Kabushiki Kaisha Toshiba, Tokyo 105-8001 (JP)
(72) Inventor: Fujiyoshi, Yasuhiro, Tokyo, 105-8001 (JP)
(74) Representative: Henkel, Breuer & Partner

(57) **Abstract**

According to one embodiment, a video output device includes a recording controller (302) and an output module (303). The recording controller (302) is configured to record program-related video data related to a television program broadcasted from a broadcast station (160) before the television program is broadcasted, in a storage module (19). The output module (303) is configured to output the program-related video data recorded in the storage module (19) on a display (7) while the television program is being broadcasted from the broadcast station (160).

## Description

### FIELD

Embodiments described herein relate generally to a video output device, a television program-related program, and a video output method.

### BACKGROUND

In recent years, a service in which video data and other various types of contents can be viewed by using portable information terminals such as tablet terminals and smart phones through an external network such as the Internet, is becoming popular. In addition, there is a tendency that an application in which video data distributed through an external network is utilized is used.

Furthermore, there has been proposed a technology in which a portable information terminal and a television broadcast receiving device are linked with each other. For example, there has been studied linkage between a television program and an application installed in a portable information terminal for when the television program is broadcasted.

When an application linked with a television broadcast program is being operated, video data can be displayed on the television broadcast receiver rather than the portable information terminal according to an instruction from the application. This achieves provision of video data utilizing the screen size of the television broadcast receiver.

In the conventional technology, however, when video data linked with the television program is distributed through the network, a large number of users access the video data while the television program is being broadcasted, thereby increasing load on a server in use and on the network.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is an exemplary view of a configuration example of a broadcast program linkage system according to an embodiment;
FIG. 2 is an exemplary block diagram of a configuration of a television broadcast receiver in the embodiment;
FIG. 3 is an exemplary view of a software configuration of the television broadcast receiver and a portable information terminal in the embodiment;
FIG. 4 is an exemplary view illustrating a concept of the television broadcast receiver and the portable information terminal of when the video-recording reservation of program-related video data is performed, in the embodiment;
FIG. 5 is an exemplary view illustrating a concept of the television broadcast receiver and the portable information terminal of when a television program is broadcasted, in the embodiment;
FIG. 6 is an exemplary view of a first example of display screens of a television program and video data for television program linkage output from an output module of the television broadcast receiver in the embodiment;
FIG. 7 is an exemplary view of a second example of display screens of a television program and video data for television program linkage output from the output module of the television broadcast receiver in the embodiment;
FIG. 8 is an exemplary sequence diagram of processing performed between the television broadcast receiver and the portable information terminal when video-recording reservation is performed, in the embodiment; and
FIG. 9 is an exemplary sequence diagram of processing performed between the television broadcast receiver and the portable information terminal when a program is broadcasted, in the embodiment.

### DETAILED DESCRIPTION

In general, according to one embodiment, a video output device comprises a recording controller and an output module. The recording controller is configured to record program-related video data related to a television program broadcasted from a broadcast station before the television program is broadcasted, in a storage module. The output module is configured to output the program-related video data recorded in the storage module on a display while the television program is being broadcasted from the broadcast station.

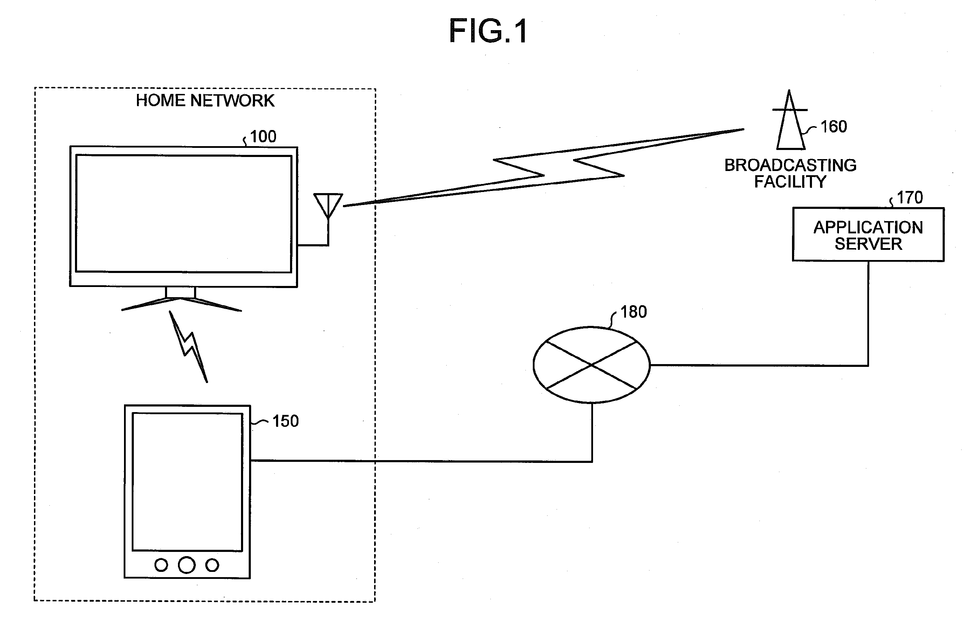

FIG. 1 is a view of a configuration of a broadcast program linkage system according to an embodiment. In the example illustrated in FIG. 1, a broadcast station comprises a broadcasting facility 160 and an application server 170. The broadcasting facility 160 broadcasts television programs using broadcast waves, for example. The application server 170 transmits an application that operates in a linked manner with a television program broadcasted by the broadcasting facility 160 through a public network (e.g., the Internet) 180.

In a home network, a television broadcast receiver 100 and a portable information terminal 150 are provided. The television broadcast receiver 100 receives a television program broadcasted by the broadcasting facility 160, for example, and performs control of displaying the television program, for example.

Examples of the portable information terminal 150 include a smart phone and a tablet terminal. In addition, other communication devices available to users, such as a personal computer (PC) and a mobile phone terminal, furthermore, other television broadcast receivers may also be used. The portable information terminal 150 enables transmission and reception of data with the television broadcast receiver 100 through a home network (e.g., a wireless LAN) . The portable information terminal 150 is connected to the application server 170 through the public network 180, and downloads an application distributed from the application server 170.

The application distributed from the application server 170 (hereinafter, also referred to as a television program-related application) is capable of instructing the television broadcast receiver 100 to replay video data in a linked manner with a television program broadcasted by the broadcasting facility 160. For example, this television program-related application is a game application linked to the television program while a television program is broadcasted.

The television program-related application operates in a linked manner with the television program. When the television program-related application receives an operation from a user while the television program is being broadcasted, the television program-related application performs control of displaying video data according to the received operation. In the embodiment, the portable information terminal 150 cooperates with the television broadcast receiver 100 to perform control of displaying video data on the television broadcast receiver 100. On this occasion, video data with a higher resolution is requested compared to the case when video data is displayed on the portable information terminal 150.

With the conventional technology, when the television broadcast receiver accesses a moving video distribution server for obtaining the video data linked with the television program while the television program is being broadcasted, access concentration occurs from a large number of communication devices (comprising the television broadcast receiver) to the moving video distribution server for obtaining the video data. As a result, the communication load on the moving video distribution server increases as long as the television program is broadcasted.

In the embodiment, therefore, the broadcasting facility 160 transmits video data linked with a television program in advance, and the television broadcast receiver 100 records the video data. This eliminates the necessity of the moving video distribution server.

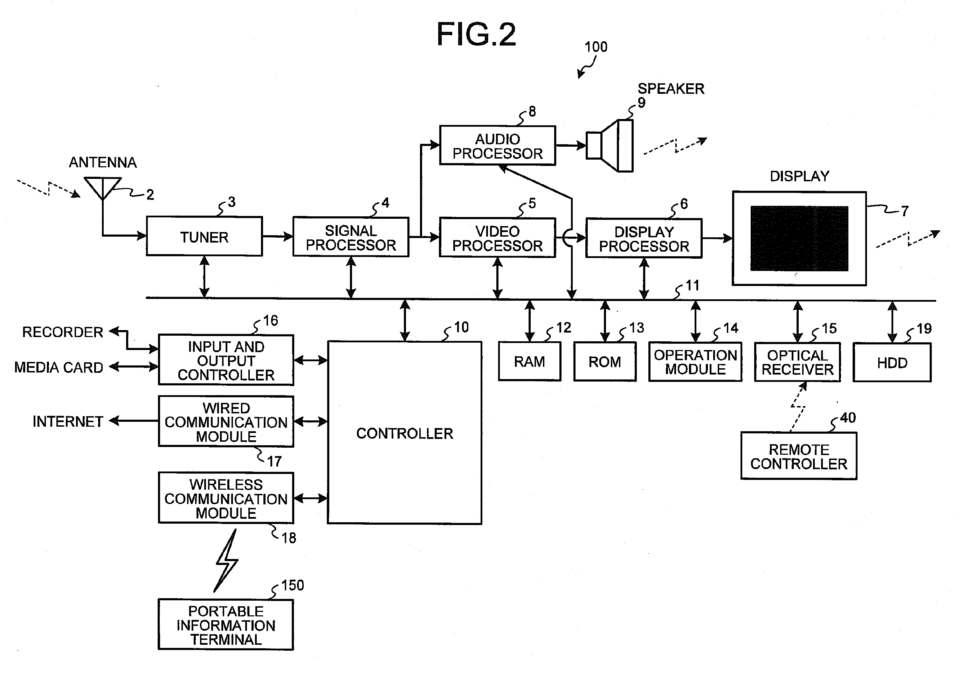

The following describes the configuration of the television broadcast receiver 100. FIG. 2 is a block diagram of the configuration of the television broadcast receiver 100 according to the embodiment. As illustrated in FIG. 2, the television broadcast receiver 100 in the embodiment mainly comprises: an antenna 2; a tuner 3 used for receiving digital broadcasting; a signal processor 4; a video processor 5; a display processor 6; a display 7; an audio processor 8; a speaker 9; a controller 10; a bus 11; a random access memory (RAM) 12; a read only memory (ROM) 13; an operation module 14; an optical receiver 15; an input and output controller 16; a wired communication module 17; a wireless communication module 18; and a hard disk drive (HDD) 19.

The antenna 2 receives a digital broadcasting through a broadcasting satellite (BS), a communication satellite (CS), or from a terrestrial station, for example. The tuner 3 selects the channel for viewing instructed by a user and demodulates signals of the received digital broadcasting. The signal processor 4 picks up the signals demodulated by the tuner 3 and signals input from the input and output controller 16 (e.g., from a recorder or a media card) as various types of digital signals under the control of the controller 10 and processes the signals. The signal processor 4 also separates the input signals into video signals and audio signals, and outputs the video signals to the video processor 5 and outputs the audio signals to the audio processor 8.

The video processor 5 performs processing of adjusting the video signals input from the signal processor 4 to the correct size of the screen, and processing of removing noise comprised in the video signals as video quality processing for improving the video quality.

The display processor 6 performs processing of displaying video signals output from the video processor 5 on the display 7. The display processor 6 superimposes an on-screen display (OSD) such as character information on the video signals output from the video processor 5. The display 7 displays the video signals on the screen thereof. Users look at the screen of the display 7 to watch television.

The audio processor 8 performs audio processing on the audio signals and amplifies them. The speaker 9 outputs the audio signals as audio. Users listen to the audio from the speaker 9 to listen to audio of television.

The controller 10 controls the modules and portions of the television broadcast receiver 100. The controller 10 is a processor capable of performing sequence processing. The controller 10 loads computer programs stored in the ROM 13 to the RAM 12, sequentially executes the programs, and outputs control signals to the modules and portions of the television broadcast receiver 100 so as to collectively control operations of the television broadcast receiver 100.

The bus 11 connects the tuner 3, the signal processor 4, the video processor 5, the display processor 6, the audio processor 8, and the controller 10 to each other, and performs data transfer among the controller 10, the tuner 3, the signal processor 4, the video processor 5, the display processor 6, and the audio processor 8. Specifically, the bus 11 may be an IIC-BUS, for example. The RAM 12 and the ROM 13 store therein various pieces of data respectively, and transfer the data to and from the controller 10 respectively.

The operation module 14 is a switch that receives operation instructions from a user. The optical receiver 15 receives signals output from a remote controller 40 that has received operation instructions from the user. The user operates various types of keys and buttons of the remote controller 40, thereby operating the television broadcast receiver 100 and any device coupled to the television broadcast receiver 100. Hereinafter, the keys and buttons are collectively called the keys.

The wired communication module 17 comprises an interface connected to a LAN cable, for example, and also comprises a function for communicating with a server connected to itself through a public network such as the Internet. The wired communication module 17 requests information from the server and receives the transmitted information from the server. The television broadcast receiver 100 in the embodiment is connected to a public network such as the Internet through a wired LAN, for example. However, a wired LAN is not necessarily used when the television broadcast receiver 100 is coupled to a public network. The television broadcast receiver 100 may be connected to public network through a wireless LAN, for example.

The wireless communication module 18 is connected to another device capable of wireless communication (e.g., the portable information terminal 150) through a wireless LAN, for example, and performs transmission and reception of information. In the embodiment, a wireless communication technology is exemplified by a wireless fidelity (Wi-Fi), however, the wireless communication technology is not limited to this example and another communication technology may be used. In addition, the television broadcast receiver 100 does not necessarily comprise the wireless communication module 18. For example, a wireless LAN dongle may be connected to a USB interface provided on the input and output controller 16, whereby the television broadcast receiver 100 wirelessly communicates with the portable information terminal 150.

The HDD 19 records therein video data of a television program reserved for video recording according to the control from the controller 10.

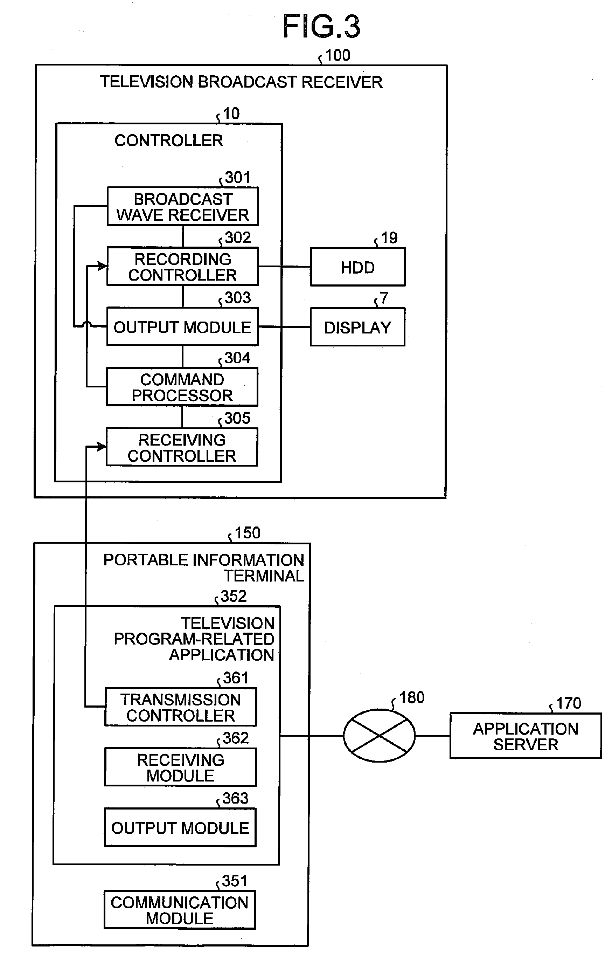

FIG. 3 is a view illustrating a software configuration of the television broadcast receiver 100 and the portable information terminal 150 in the embodiment.

In the example illustrated in FIG. 3, the controller 10 of the television broadcast receiver 100 executes a computer program recorded in the ROM 13, thereby implementing a broadcast wave receiver 301, a recording controller 302, an output module 303, a command processor 304, and a receiving controller 305.

The broadcast wave receiver 301 performs control of receiving a digital broadcast program through a BS, a CS, or from a terrestrial station, for example, through the tuner 3.

The recording controller 302 performs control of recording the digital broadcast program controlled to be received by the broadcast wave receiver 301 in the HDD 19.

The output module 303 performs control of outputting the digital broadcast program controlled to be received by the broadcast wave receiver 301 on the display 7. The output module 303 also performs control of outputting the digital broadcast program recorded in the HDD 19 on the display 7.

The receiving controller 305 performs control of receiving data from the portable information terminal 150 through a wireless or wired network provided as a home network.

When a command for the television broadcast receiver 100 is comprised in the data controlled to be received by the receiving controller 305, the command processor 304 performs processing according to the command.

The portable information terminal 150 comprises a communication module 351. When a controller (not illustrated) executes a television program-related application 352, a transmission controller 361, a receiving module 362, and an output module 363 are implemented. The television program-related application 352 in the embodiment is downloaded by a user from the application server 170 through the public network 180.

Examples of the television program-related application 352 include a game application comprising a quiz, for example, and any other application may be used as long as it is linked with the television program. The television program-related application 352 performs control of replaying the video data at some points during its operation. In the embodiment, the television broadcast receiver 100 is determined as the display destination of the video data.

The output module 363 outputs program-related content related to the broadcast television program to a display device (e.g., a liquid crystal panel) comprised in the portable information terminal 150 while the television program is being broadcasted from the broadcast station. When the output module 363 outputs the program-related content, the television program-related application 352 may perform transmission or reception of the data with the application server 170 through the communication module 351 so as to synchronize with the television program being broadcasted.

When the output module 363 outputs the program-related content, the receiving module 362 receives an operation corresponding to the program-related content through the interface (e.g., a touch panel) provided on the portable information terminal 150. When the receiving module 362 receives the operation, the output module 363 performs display according to the operation.

The transmission controller 361 transmits data to the display destination of the program-related video data (in the embodiment, the television broadcast receiver 100) while the television program is being broadcasted. The data comprises a command for the television broadcast receiver 100.

For example, while the output module 363 outputs the program-related content and when the receiving module 362 receives an operation through the interface (e.g., a touch panel) provided on the portable information terminal 150, the transmission controller 361 transmits a display command of the video data corresponding to the operation to the television broadcast receiver 100.

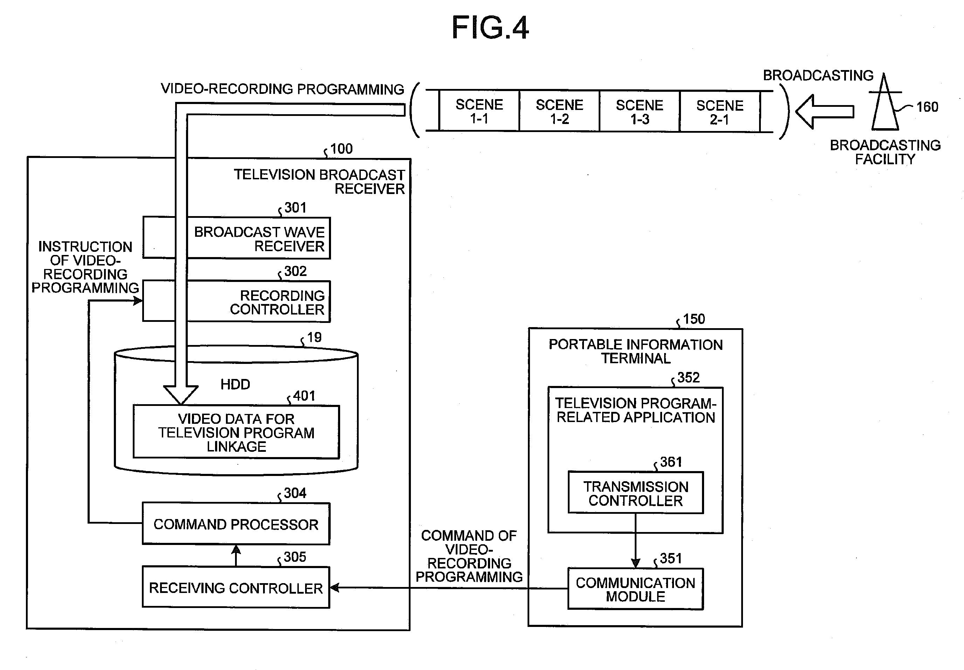

In the television broadcast receiver 100 in the embodiment, the program-related video data related to the broadcast television program needs to be programmed for recording, in advance. The procedures for programming the video-recording will be now described. FIG. 4 is a view illustrating a concept of the television broadcast receiver 100 and the portable information terminal 150 in the embodiment when programming of video-recording of program-related video data is performed. In the embodiment, before the television program is broadcasted, the program-related video data related to the television program is broadcasted in advance. The program-related video data is broadcasted in the midnight, for example, because few persons watch television.

Firstly, a user downloads the television program-related application 352 on the portable information terminal 150 and then starts up the television program-related application 352.

After the television program-related application 352 is started up, the transmission controller 361 in the television program-related application 352 transmits a command for programming the video-recording that instructs the television broadcast receiver 100 to perform programming the video-recording of, or record the program-related video data related to the television program, which is broadcasted from the broadcast station in a time zone before the television program is broadcasted to the television broadcast receiver 100 through the communication module 351.

The receiving controller 305 of the television broadcast receiver 100 receives the command for programming the video-recording that instructs the television broadcast receiver 100 to record the program-related video data broadcasted from the broadcast station in a time zone before the television program is broadcasted from the portable information terminal 150.

The command processor 304 then performs processing according to the received command for programming the video-recording. For example, the command processor 304 instructs the recording controller 302 to perform the programming of the video-recording of the program-related video data.

This makes the recording controller 302 perform control of recording the program-related video data related to the television program (hereinafter, also referred to as video data for television program linkage 401) that has been broadcasted in a time zone before the television program is broadcasted according to the command for programming the video-recording, in the HDD 19.

As illustrated in FIG. 4, the video data for television program linkage 401 is such data in which pieces of video data of a plurality of scenes such as "a scene 1-1", "a scene 1-2", "a scene 1-3", and "a scene 2-1" are connected together. The signal format of the video data may be the same as that of a usual television program. The video data does not necessarily make sense to the viewers watching the video. After the video data for television program linkage 401 is recorded, the television broadcast receiver 100 reads out the video data of a necessary scene or scenes from the HDD 19 and displays the read out scene or scenes on the display 7 while the television program is being broadcasted, according to the display command from the television program-related application 352 being executed on the portable information terminal 150. This achieves the linkage of the television broadcast receiver 100 with the television program-related application 352.

A group of scenes broadcasted as the television program is perceived by the broadcast station that creates the television program. The television program-related application 352 is also created by the broadcast station, therefore, the starting points of respective scenes can be embedded in the television program-related application 352 in advance.

The output module 303 replays the video data from the starting points of respective scenes comprised in the video data for television program linkage 401. In the embodiment, the starting points of respective scenes are comprised in the display command. The replay method of the video data is not limited to this example. For another example, the starting points of the respective scenes may be comprised in meta data of the video data for television program linkage 401, and identification information of a scene may be received as the display command.

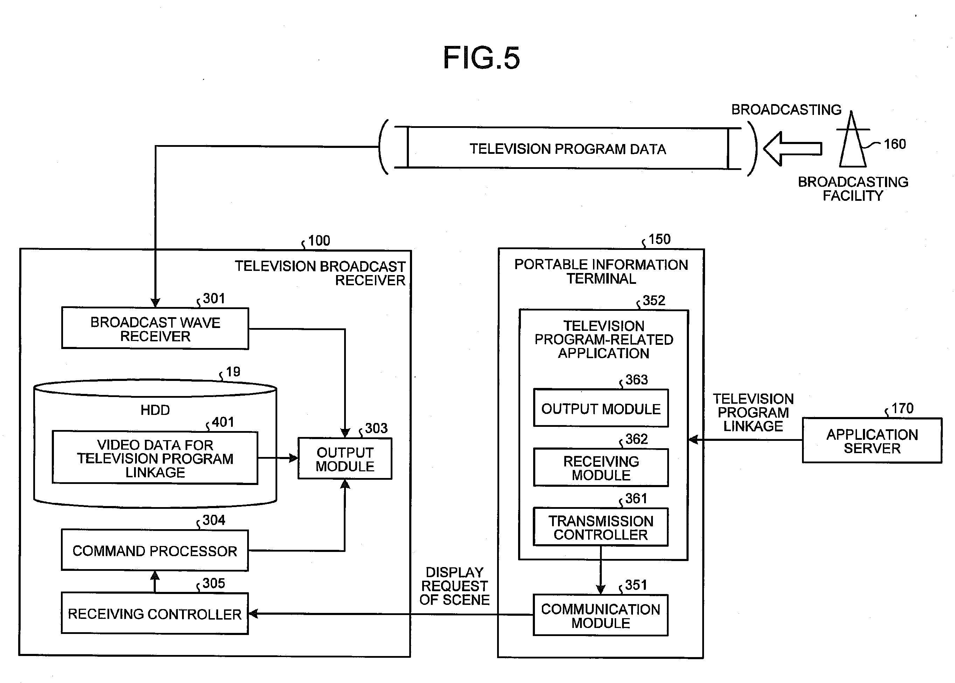

The video data for television program linkage 401 is used when the television program is broadcasted. FIG. 5 is a view of illustrating a concept of the television broadcast receiver 100 and the portable information terminal 150 in the embodiment when a television program is broadcasted. The programming for the video-recording of the video data for television program linkage 401 has been already performed in the embodiment.

The broadcast wave receiver 301 of the television broadcast receiver 100 receives the television program broadcasted by the broadcasting facility 160 through the tuner 3 in a time zone when the television program is broadcasted. The output module 303 displays the television program received by the broadcast wave receiver 301 on the display 7.

The television program-related application 352 being executed on the portable information terminal 150 cooperates with the television program by transmitting and receiving data to and from the application server 170 through the communication module 351.

For example, the output module 363 of the television program-related application 352 outputs program-related content related to the television program (e.g. , a mini game and a quiz) . When video data of a predetermined the scene needs to be replayed during the output, the transmission controller 361 specifies the playback position of the scene and transmits a display command (replay instruction) to the television broadcast receiver 100.

When the receiving module 362 receives an operation corresponding to the program-related content while the output module 363 outputs the program-related content, the transmission controller 361 may transmit a display command for displaying the video data of the scene corresponding to the operation received by the receiving module 362 to the television broadcast receiver 100 through the communication module 351.

This makes the television broadcast receiver 100 display (replay) the video data of the scene corresponding to the scene of the program-related content. The targeted video data of the scene for display is any one piece of video data of the scenes comprised in the video data for television program linkage 401.

While the output module 303 outputs the television program on the display 7, the receiving controller 305 of the television broadcast receiver 100 receives a display command for one of the pieces of the video data of the scenes recorded as the video data for television program linkage 401, as a display command from the portable information terminal 150.

The command processor 304 then performs processing according to the received display command. This makes the output module 303 output one of the pieces of the video data of the scenes recorded as the video data for television program linkage 401 in the HDD 19 on the display 7 while the television program is being broadcasted from the broadcast station, according to the display command received by the receiving controller 305.

As described above, the television broadcast receiver 100 achieves display of the video data for television program linkage 401 programmed for recording in advance according to the display command from the portable information terminal 150.

When outputting the video data for television program linkage 401 on the display 7 according to the display command, the output module 303 in the embodiment outputs the video data for television program linkage 401 together with the television program on the display 7. However, this does not limit the display mode of the video data for television program linkage 401 on the display 7 by the output module 303 to this example.

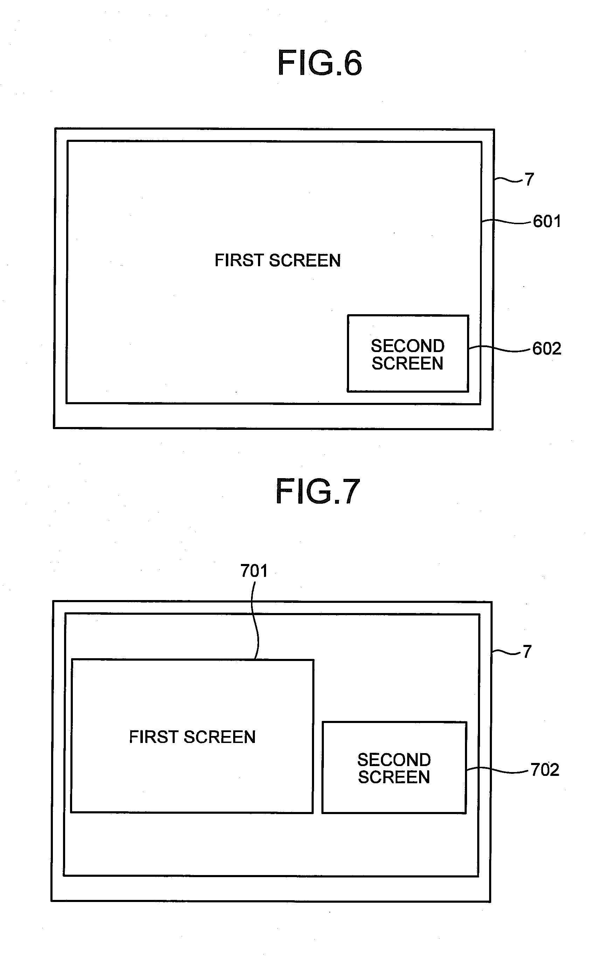

FIG. 6 is a view illustrating a first example of display screens of a television program and the video data for television program linkage 401 output from the output module 303. In the example illustrated in FIG. 6, a first screen 601 displays a television program and a second screen 602 displays video data of a scene comprised in the video data for television program linkage 401. This enables users to view the video of the scene as an operation result of the television program-related application related to the television program while watching the television program. Alternatively, the first screen 601 may display the video data for television program linkage 401 and the second screen 602 may display the television program.

The display mode is not limited to the screen example illustrated in FIG. 6 and another display mode may be used. FIG. 7 is a view illustrating a second example of display screens of a television program and the video data for television program linkage 401 output from the output module 303. In the example illustrated in FIG. 7, a first screen 701 displays a television program and a second screen 702 displays video data of a scene comprised in the video data for television program linkage 401. Also in this example, the first screen 701 may display the video data for television program linkage 401 and the second screen 702 may display the television program, alternatively.

If the content of the television program can be recognized only with the audio of the program, the output module 303 may output only the video data comprised in the video data for television program linkage 401 on the display 7.

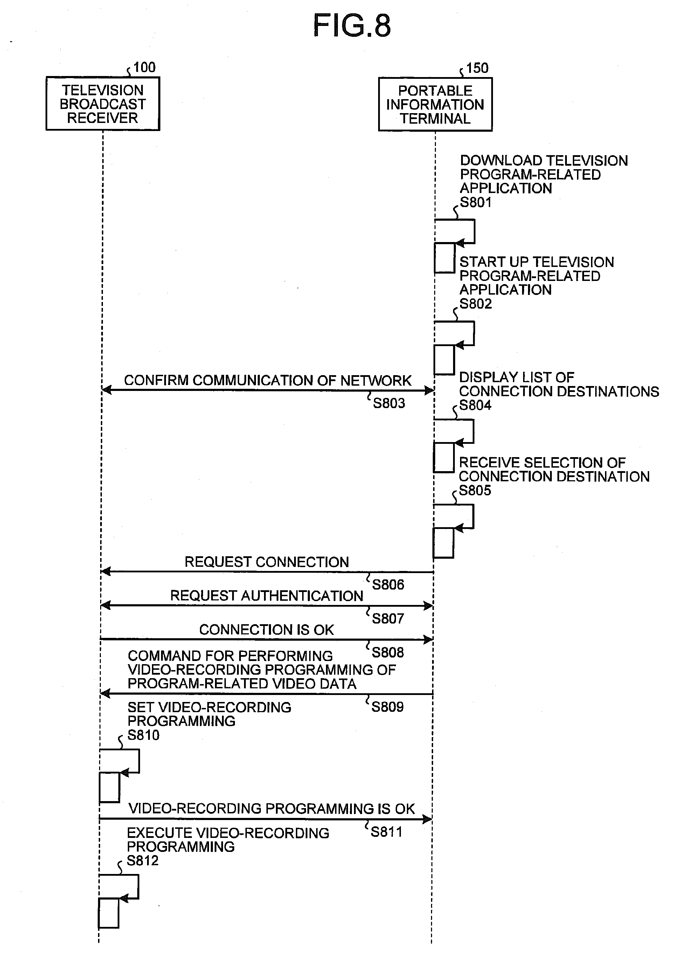

The following describes the processing performed between the television broadcast receiver 100 and the portable information terminal 150 when programming of video-recording is performed. FIG. 8 is a sequence diagram illustrating procedures of the above-described processing performed between the television broadcast receiver 100 and the portable information terminal 150 in the embodiment.

Firstly, the portable information terminal 150 downloads the television program-related application 352 from the application server 170 (S801).

The portable information terminal 150 then starts up the downloaded television program-related application 352 (S802). This makes the portable information terminal 150 confirm the communication between a communication apparatus existing in a home network and the network using the communication module 351 (S803).

The output module 363 of the television program-related application 352 displays a list of connection destinations comprising the communication devices of which communications have been confirmed (S804). The receiving module 362 then receives a selection of the connection destination (S805). In the present sequence, the television broadcast receiver 100 has been selected as the connection destination.

Subsequently, the transmission controller 361 of the portable information terminal 150 requests connection from the television broadcast receiver 100 (S806). Triggered by the reception of the connection request, authentication is requested between the television broadcast receiver 100 and the portable information terminal 150 (S807). In the authentication request, for example, identification information and a password that have been set in the television broadcast receiver 100 are input from the portable information terminal 150.

After that, the television broadcast receiver 100 transmits an acknowledgement of connection ("connection is OK") to the portable information terminal 150 (S808) . This enables the television program-related application 352 to transmit a command to the television broadcast receiver 100.

The transmission controller 361 of the television program-related application 352 running on the portable information terminal 150 transmits a command to the television broadcast receiver 100 for performing programming of video-recording of the program-related video data (S809). When this command for programming of the video-recording is received, the command processor 304 processes the command and the recording controller 302 sets the programming for the video-recording of the program-related video data (S810). Subsequently, the television broadcast receiver 100 transmits the completion of the setting of the programming for the video-recording to the portable information terminal 150 ("programming for video-recording is OK") (S811). This enables the portable information terminal 150 to recognize that the programming for the video-recording of the program-related video data has been set.

After that, the recording controller 302 of the television broadcast receiver 100 executes the programming for the video-recording of the program-related video data according to the setting (S812). As a result, the program-related video data is recorded in the HDD 19.

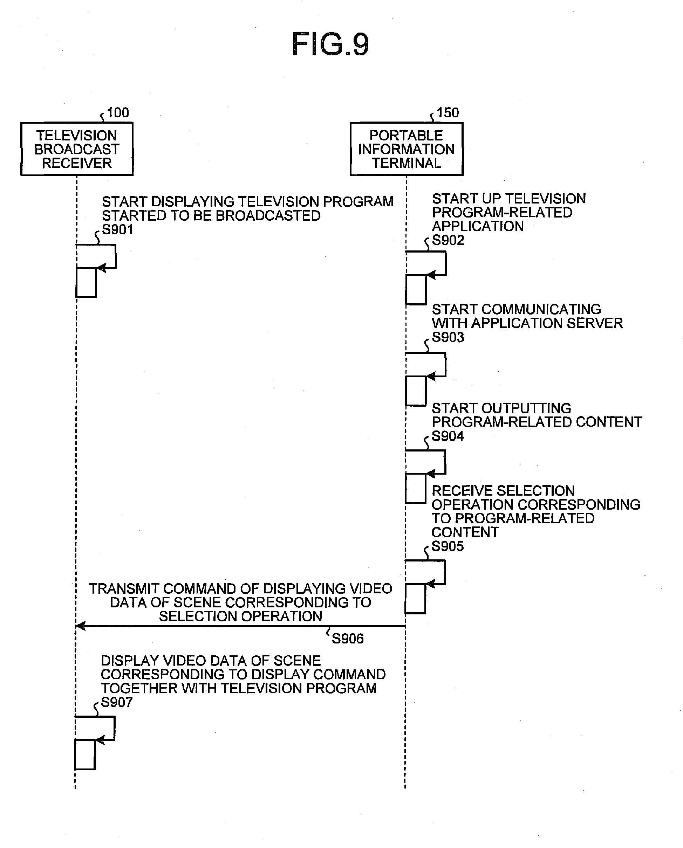

The following describes the processing performed between the television broadcast receiver 100 and the portable information terminal 150 while the television program is being broadcasted. FIG. 9 is a sequence diagram illustrating the above-described processing procedures performed between the television broadcast receiver 100 and the portable information terminal 150 in the embodiment.

Firstly, the output module 303 of the television broadcast receiver 100 starts displaying the television program that has been started to be broadcasted through the broadcast wave receiver 301 on the display 7 (S901).

In the portable information terminal 150, the television program-related application 352 is started up according to the operation by a user (S902). The television program-related application 352 then starts communication with the application server 170 (S903). The television program-related application 352 obtains detailed information on the television program from the application server 170, thereby achieving close linkage between the television program-related application 352 and the television program.

The output module 363 of the portable information terminal 150 then starts outputting the program-related content on the display panel of the portable information terminal 150 (S904). Subsequently, the receiving module 362 receives a selection operation corresponding to the program-related content (S905).

The transmission controller 361 then transmits a display command of the video data of the scene corresponding to the selection operation to the television broadcast receiver 100 (S906).

The output module 303 of the television broadcast receiver 100 displays the video data of the scene corresponding to the display command together with the television program on the display 7 (S907).

Through the above-described processing, the video data of the scene corresponding to the program-related content output on the portable information terminal 150 can be displayed in the television broadcast receiver 100.

In the description of the embodiment, a video output device is exemplified by the television broadcast receiver 100, however, the embodiment is not limited to this example. Any other video output device can be used as long as it comprises a function for recording a television program broadcasted and a function for replaying the recorded television program from the specified point according to the command received through the network. The video recording function, the command receiving function, and the video replaying function may be achieved with a combination of a plurality of devices. These functions are not necessarily comprised in an integrated device.

In the description of the embodiment, the portable information terminal 150 and the television broadcast receiver 100 are connected to each other in a home network (e. g. , a wireless LAN), however, the embodiment is not limited to this example. Any other connection method can be used as long as a command for instructing replay can be processed between the portable information terminal 150 and the television broadcast receiver 100. For example, an Ethernet (registered trademark), a Wi-Fi, a Bluetooth (registered trademark), and a universal serial bus (USB) can be used.

As described above, according to the embodiment, the program-related video data related to the television program is broadcasted before the television program, and programmed for recording in the television broadcast receiver 100. This eliminates the necessity of distributing the program-related video data through the network, whereby the effort and cost for providing a moving video distribution server and the network load can be reduced.

Conventionally, the program-related video data displayed on the television broadcast receiver 100 is expected to have higher video quality compared to the case when video data is displayed on the portable information terminal 150. Accordingly, the network load tends to be increased when the program-related video data is distributed from the moving video distribution server. In the embodiment, however, the program-related video data is broadcasted in advance, thus additional network load can be reduced.

Unlike the conventional remote relation between the portable information terminal and the television broadcast receiver, in which the portable information terminal is mere a remote controller of the television broadcast receiver, for example, in the embodiment, the television broadcast receiver 100 and the portable information terminal 150 cooperate with each other. They are united and constitute a home network, thereby achieving a service comprising various types of contents related to a television program and combined with each other.

In addition, in the embodiment, the display 7 of the television broadcast receiver 100 is used together with the display device (e.g., a liquid crystal panel) of the portable information terminal 150, thereby combining the television program with the program-related content related to the television program to provide a united service. Also in the embodiment, no moving video distribution server or the like is required, thereby reducing the network load. Furthermore, in the embodiment, the program-related video data related to the television program can be transmitted with a high resolution, high quality video can be provided if the display 7 has a large screen.

The application server 170 in the embodiment has been described as a facility of a broadcast station, however, the embodiment is not limited to this example. For another example, the application server 170 may be a facility of another business cooperating with the broadcast station.

In the embodiment, the program-related video data as an operation result of the portable information terminal 150 is displayed on the television broadcast receiver 100. This provides a user with video data having more sense of presence and power compared to the case when video data is displayed on the portable information terminal 150.

In the embodiment, when a user uses the television program-related application 352 while watching the broadcasted television program, a large number of users are assumed to perform the same operation at the same time. The potential network load, in particular, to occur in this case is expected to be reduced according to the embodiment.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A video output device comprising:
a recording controller (302) configured to record program-related video data related to a television program broadcasted from a broadcast station (160) before the television program is broadcasted, in a storage module (19); and
an output module (303) configured to output the program-related video data recorded in the storage module (19) on a display (7) while the television program is being broadcasted from the broadcast station (160).

2. The video output device of Claim 1, further comprising:
a receiver (305) configured to receive a display command for the program-related video data recorded in the storage module (19) from a communication device (150) connected to the video output device (100) through a network while the television program is being broadcasted from the broadcast station (160), wherein
the output module (303) is configured to output the program-related video data on the display (7) according to the display command received by the receiver (305).

3. The video output device of Claim 2, wherein, when the output module (303) outputs the program-related video data on the display (7) according to the display command received by the receiver (305), the output module (303) outputs the program-related video data together with the television program on the display (7).

4. The video output device of Claim 2 or 3, wherein
the recording controller (302) is configured to record pieces of video data of a plurality of scenes, respectively, as the program-related video data related to the television program in the storage module (19), and
the receiver (305) is configured to receive a display command of one of the pieces of video data of one of the scenes as the display command while the television program is being broadcasted from the broadcast station (160).

5. The video output device of any one of Claims 2 to 4, wherein
the receiver (305) is configured to receive a recording command for recording the program-related video data broadcasted from the broadcast station (160) before the television program is broadcasted from the communication device (150), and
the recording controller (302) is configured to record the program-related video data in the storage module according to the recording command.

6. The video output device of any one of Claims 1 to 5, further comprising the display (7) that is configured as a display destination of the program-related video data.

7. A television program-related program that causes a computer (150) comprising a communication module (351) to execute:
outputting program-related content related to a television program while the television program is being broadcasted from a broadcast station (160); and
transmitting, upon activation of the television program-related program, a recording command for recording program-related video data related to a television program broadcasted from the broadcast station (160) in a time zone before the television program is broadcasted to a video output device (100) connected through the communication module (351).

8. The television program-related program of Claim 7, wherein the transmitting further comprises transmitting a display command for displaying the program-related video data to the video output device (100) through the communication module (351) while the program-related content is being output at the outputting.

9. The television program-related program of Claim 8, wherein
program-related video data for which the recording command is transmitted at the transmitting comprises pieces of video data of a plurality of scenes, respectively, and,
at the transmitting, the display command for displaying one of the scenes corresponding to the program-related content that has been output at the outputting is transmitted.

10. The television program-related program of Claim 9, causing the computer to further execute receiving an operation corresponding to the program-related content through an interface comprised in the computer while the program-related content is being output at the outputting, wherein,
at the transmitting, the display command for displaying one of the pieces of video data of the scenes is transmitted according to the operation received at the receiving.

11. A video output method executed on a video output device (100), the video output method comprising:
recording program-related video data related to a television program broadcasted from a broadcast station (160) before the television program is broadcasted, in a storage module (19); and
outputting the program-related video data recorded in the storage module (19) on a display (7) while the television program is being broadcasted from the broadcast station (160).

12. The video output method of Claim 11, further comprising:
receiving a display command for the program-related video data recorded in the storage module (19) from a communication device (150) connected to the video output device (100) through a network while the television program is being broadcasted from the broadcast station (160), wherein,
at the outputting, the program-related video data is output on the display (7) according to the display command received at the receiving.

13. The video output method of Claim 12, wherein
at the receiving, a recording command for recording the program-related video data broadcasted from the broadcast station (160) before the program-related video data is broadcasted is received from the communication device (150), and,
at the recording, the program-related video data is recorded in the storage module (19) according to the recording command.
